# EUROPEAN PATENT SPECIFICATION

(11) **EP 3 546 181 B1**
(45) Date of publication and mention of the grant of the patent: **23.09.2020**
(21) Application number: 19163587.9
(22) Date of filing: 19.03.2019
(51) Int. Cl.: B29C 45/76, G05B 19/409

(54) **CONTROLLER OF INJECTION MOLDING MACHINE AND INJECTION MOLDING MACHINE**
STEUERGERÄT EINER SPRITZGIESSMASCHINE SOWIE SPRITZGIESSMASCHINE
CONTRÔLEUR DE MACHINE DE MOULAGE PAR INJECTION ET MACHINE DE MOULAGE PAR INJECTION

(30) Priority: 29.03.2018 JP 2018065703
(43) Date of publication of application: 02.10.2019
(73) Proprietor: Sumitomo Heavy Industries, Ltd., Tokyo 141-6025 (JP)
(72) Inventor: YOSHIOKA, Yutaro, Chiba-shi, Chiba, 263-0001 (JP)
(74) Representative: Louis Pöhlau Lohrentz

(56) References cited:
- EP-A1- 3 006 183
- WO-A1-2017/071850
- JP-A- H0 691 716
- JP-A- 2004 155 085
- US-A- 5 539 650
- US-A1- 2016 236 392
- "Selogica - the control unit for all ALLROUNDER injection moulding machines", 20020501, 1 May 2002 (2002-05-01), pages 1-31, XP002305034,

## Description

### BACKGROUND OF THE INVENTION

### Field of the Invention

Certain embodiment of the present invention relates to a controller of an injection molding machine and an injection molding machine.

### Description of Related Art

Japanese Unexamined Patent Publication No. 2007-98810 discloses an operation setting method in a mold opening process or a mold closing process in an injection molding machine. For example, in this operation setting method, a plurality of display figures that schematize operations performed during the mold opening process are created and the plurality of display figures are rearranged to set an order of a plurality of operations performed during the mold opening process. European Patent Application EP 3 006 183 A1 discloses a control device for injection molding machine and screen display method. Japanese Patent Application JP H06 91716A discloses a graphic display of operation state in an injection molding machine. International Patent Application WO 2017/071850 A1 discloses a plastic inj ection-molding machine having a data memory for storing text information or image information. Japanese Patent Application JP 2004 155085 A discloses an abnormality release device of an injection molding machine. US Patent Application US 2016/236392 A1 discloses a molding condition diagnostic device. US Patent Application US 5 539 650 A discloses a knowledge based method of controlling an injection molding machine. Non-patent document "Selogica - the control unit for all ALLROUNDER injection moulding machines", 1 May 2002, Technical information ARBURG, discloses a control unit.

### SUMMARY OF THE INVENTION

In the related art, an operation sequence (a content and sequence of an operation) of the injection molding machine when an abnormality occurs in the injection molding machine is specified by a program created by a manufacturer of the injection molding machine. Modification of the program involves analysis of the program, which is difficult for a user of the injection molding machine.

An aspect of an embodiment is to provide a technology by which a user of an injection molding machine can easily determine an operation sequence of the injection molding machine when an abnormality occurs in the injection molding machine.

According to an aspect of an embodiment, there is provided a controller of an injection molding machine which controls an operation of the injection molding machine, including: a display control unit which displays a display screen on a display unit, a plurality of setting fields to which operation modules of the injection molding machine sequentially performed when an abnormality occurs in the injection molding machine are input to be exchangeable being arranged on the display screen; and an operation sequence creation unit which creates an operation sequence of the injection molding machine to be performed when the abnormality occurs in the injection molding machine, according to data input to the plurality of setting fields.

According to the aspect of the embodiment, a user of the injection molding machine can easily determine the operation sequence of the injection molding machine when the abnormality occurs in the injection molding machine.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a functional block diagram showing components of a controller of the injection molding machine according to the embodiment.
Fig. 4 is a diagram showing a first display screen displayed by a first display control unit according to the embodiment.
Fig. 5 is a diagram showing a display screen which sets an operation sequence when a plasticizing time abnormality occurs according to the embodiment.
Fig. 6 is a diagram showing a display screen which sets an operation sequence when a load abnormality of an injection motor occurs according to the embodiment.
Fig. 7 is a diagram showing a display screen which sets an operation sequence when a mold protection abnormality occurs according to the embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

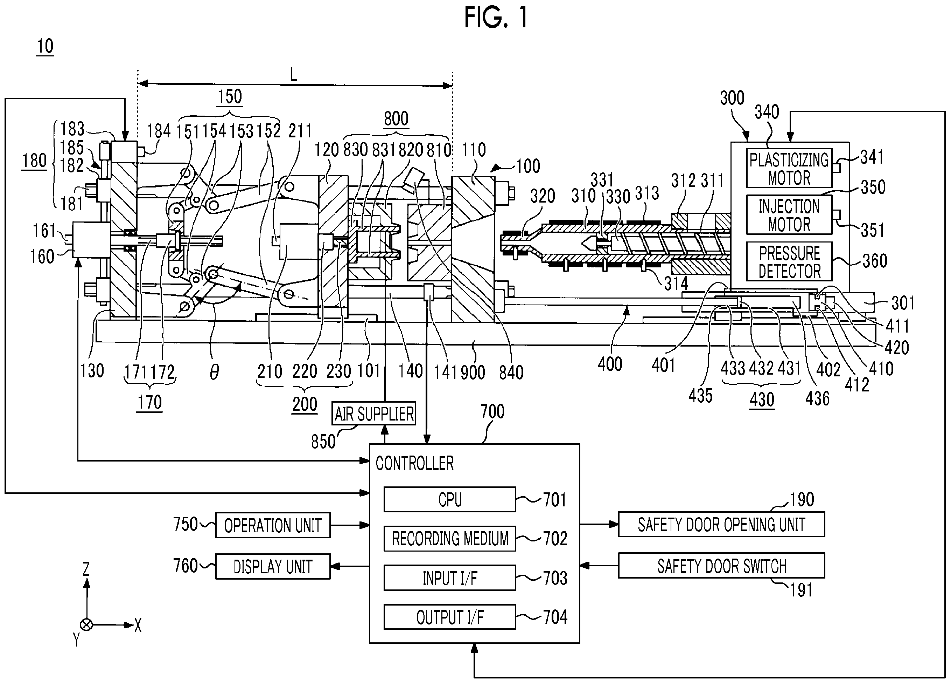

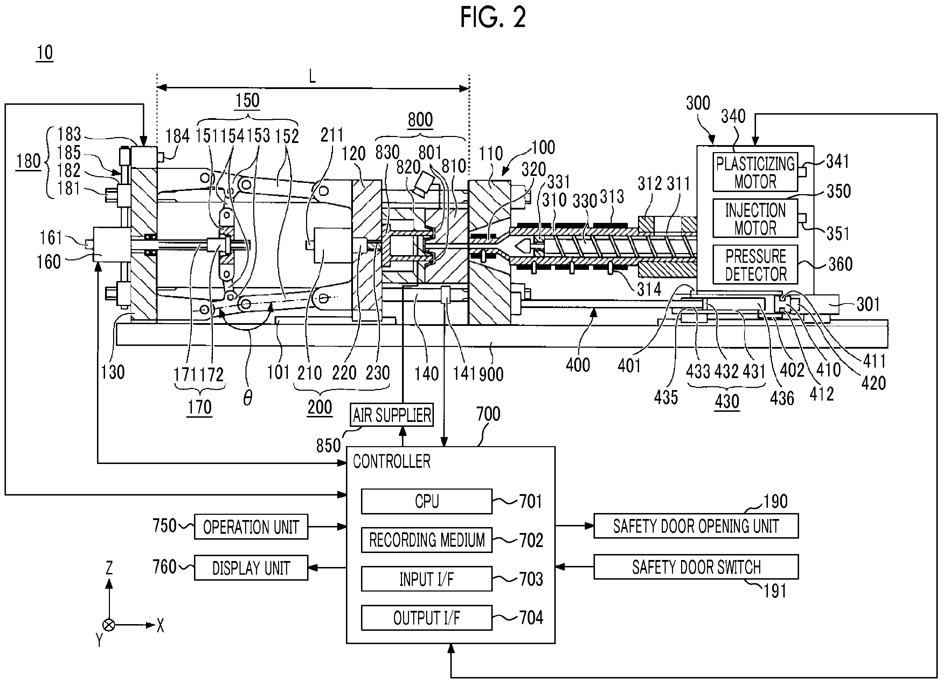

Fig. 1 is a view showing a state when a mold opening of an injection molding machine according an embodiment is completed. Fig. 2 is a view showing a state when a mold of the injection molding machine according to the embodiment is clamped. In Figs . 1 and 2, an X direction, a Y direction, and a Z direction are directions perpendicular to each other. The X direction and the Y direction indicate a horizontal direction, and the Z direction indicates a vertical direction. In a case where the a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a controller 700, and a frame 900. Hereinafter, each component of the injection molding machine 10 will be described.

### (Mold Clamping Unit)

In descriptions of the mold clamping unit 100, a movement direction (for example, an X positive direction) of a movable platen 120 when a mold is closed is defined as a front side, and a movement direction (for example, an X negative direction) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like.

The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a pressurization process, a depressurization process, and a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or a movement speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used. During the mold closing process, the movable platen 120 may be temporarily stopped by temporarily stopping the crosshead 151. In a state where the movable mold 820 is temporarily stopped, an insert material can be installed in the movable mold 820 or the stationary mold 810.

In the pressurization process, the mold clamping motor 160 is further driven to move the crosshead 151 forward from the mold closing completion position to a mold clamping position, and thus, the mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. One cavity space 801 may be provided. However, as shown in Fig. 2, a plurality of cavity spaces 801 may be provided. In the latter case, a plurality of molding products can be simultaneously obtained. The insert material is disposed in a portion of the cavity space 801, and another portion of the cavity space 801 may be filled with the molding material. Accordingly, a molding product in which the insert material and the molding material is integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the pressurization process are collectively set as a series of setting conditions. For example, a movement speed or positions (including mold opening/closing start position, movement speed switching position, mold closing completion position, and mold clamping position) of the crosshead 151 and the mold clamping force in the mold closing process and the pressurization process are collectively set as a series of setting conditions. The mold opening/closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions . The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position and the mold clamping position may be the same as each other. In addition, the mold opening completion position and the mold opening/closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, the X positive direction) of the movable platen 120 when the mold is closed is defined as the front side, and the movement direction (for example, the X negative direction) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. For example, a position or movement speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod movement speed detector which detects the movement speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (for example, the X negative direction) of a screw 330 during filling is referred to as a front side, and a movement direction (for example, the X positive direction) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (for example, X direction) of the cylinder 310. The heating unit 313 and the temperature detector 314 are provided in each of the plurality of zones. A set temperature is set for each of the plurality of zones, and the controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detectedusing aplasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and the rotating speed of the screw 330 in the plasticizing process are collectively set as a series of setting conditions. Forexample, a plasticizingstart position, a rotating speed switching position, and a plasticizing completion position are set. The positions are arranged in this order from the front side to the rear side and indicate start points and end points of sections where the rotating speed is set. The rotating speed is set for each section. The rotating speed switching position may be one or more. The rotating speed switching position may not be set. Moreover, the back pressure is set for each zone.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

The position and the movement speed of the screw 330 in the filling process are collectively set as a series of setting conditions. For example, a filling start position, a movement speed switching position, and a V/P switching position are set. The positions are arranged in this order from the front side to the rear side and indicate start points and end points of sections where the movement speed is set. The movement speed is set for each section. The movement speed switching position may be one or more.

An upper limit of the pressure of the screw 330 is set for each section where the movement speed of the screw 330 is set. The pressure of the screw 330 is detected by a pressure detector 360. In a case where a detection value of the pressure detector 360 is a set pressure or less, the screw 330 moves forward at the set movement speed. Meanwhile, the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (for example, the X negative direction) of the screw 330 during filling is referred to as a front side, and the movement direction (for example, the X positive direction) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the plasticizing process, the mold closing process, the pressurization process, the filling process, the holding pressure process, the cooling process, the depressurization process, the mold clamping process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the filling process, the holding pressure process, the cooling process, the depressurization process, the mold opening process, and the ejection process in this order. Here, this order is an order of the start of each process. The filling process, the holding pressure process, and the cooling process are performed between the start of the pressurization process to the end of the depressurization process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed from the start of the pressurization process to the end of the depressurization process. In this case, the molding closing cycle may be performed at an initial stage of the molding cycle. In addition, the filling process may start during the molding closing process. Moreover, the ejection process may start during the mold opening process. In a case where an on/off valve which opens and closes the flow path of the nozzle 320 is provided, the mold opening process may start during the plasticizing process. Accordingly, even when the molding opening process starts during the plasticizing process, if the on/off valve closes the flow path of the nozzle 320, the molding material does not leak from the nozzle 320.

In addition, the once molding cycle may include a process other than the plasticizing process, the mold closing process, the pressurization process, the filling process, the holding pressure process, the cooling process, the depressurization process, the mold opening process, and the ejection process. For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

The controller 700 is connected to an operation unit 750 or the display unit 760. The operation unit 750 receives an input operation from a user and outputs a signal corresponding to the input operation to the controller 700. The display unit 760 displays a display screen corresponding to the input operation of the operation unit 750 under the control of the controller 700.

The display screen is used for the setting of the injection molding machine 10 or the like. A plurality of display screens are prepared, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### (Operation Sequence at Abnormal Time)

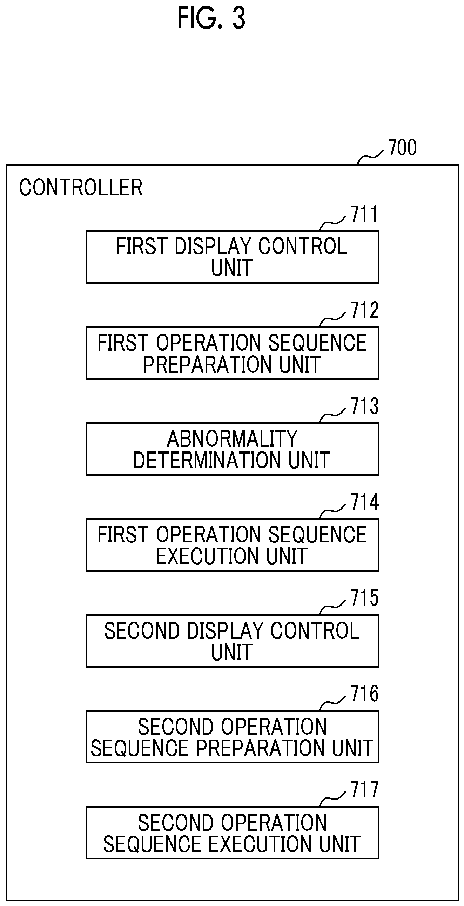

Fig. 3 is a functional block diagram showing components of the controller of the injection molding machine according to the embodiment. Functional blocks shown in Fig. 3 are conceptual and do not necessarily have to be physically configured as shown. It is possible to constitute all or some of the functional blocks by functionally or physically dispersing and integrating in any unit. The entirety or any portion of each processing function performed in each functional block can be realized by a program executed by the CPU or can be realized as hardware by wired logic.

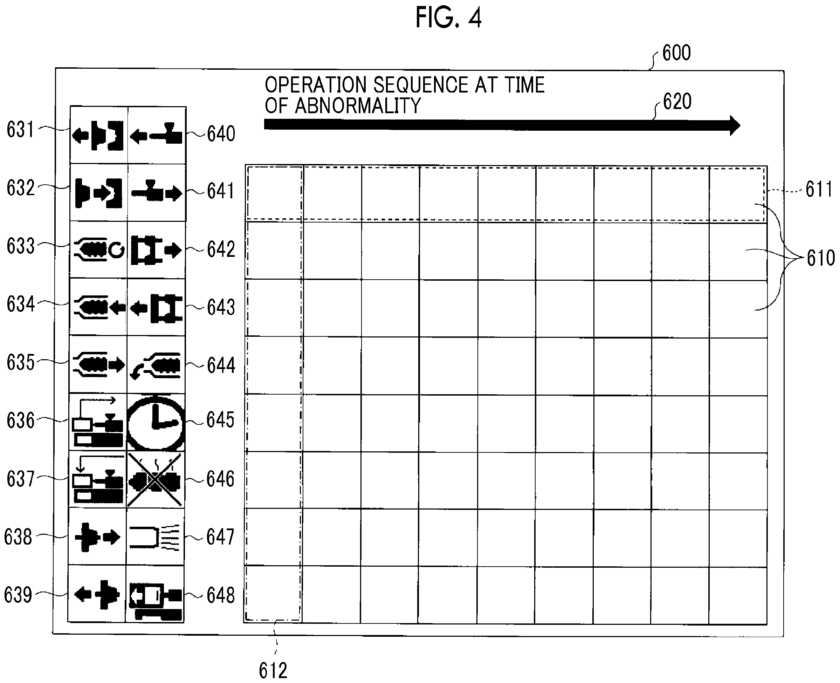

As shown in Fig. 3, the controller 700 includes a first display control unit 711 which displays a first display screen 600 (refertoFig. 4) on the displayunit 760, in which the plurality of setting fields 610 (referto Fig. 4) to which operation modules of the injection molding machine 10 sequentially performed when an abnormality occurs in the injection molding machine 10 are input so as to be exchangeable are arranged on the first display screen 600. The operation module of the injectionmoldingmachine 10 is a unit of an operation function of the injection molding machine 10. An operation sequence is constituted by combining the plurality of operation modules. Combinations and order of the plurality of operation modules are arbitrary and determined by the user of the injection molding machine 10.

Fig. 4 is a diagram showing the first display screen displayed by the first display control unit according to the embodiment. For example, the first display screen 600 includes the plurality of setting fields 610, a time axis 620 for determining an order in which the operation modules input to the setting fields 610 are performed, and icons 631 to 648 which indicate operation modules to be input to the setting fields 610 outside the setting fields 610 by figures.

The first display screen 600 is displayed on the display unit 760. The user of the injection molding machine 10 operates the operation unit 750 while viewing the first display screen 600 displayed on the display unit 760 to input the operation module of the injection molding machine 10 to the setting field 610.

The plurality of setting fields 610 are arranged in a line in a direction (for example, lateral direction) parallel to the time axis 620. The arrangement order indicates an order in which the input operation modules are performed. According to a flow of the time axis 620, the order of the operation modules input to the setting field 610 is determined.

The plurality of setting fields 610 arranged in a direction parallel to the time axis 620 constitute a first setting field group 611. One operation sequence is constituted by the plurality of operation modules input to the plurality of setting fields 610 constituting one first setting field group 611.

A plurality of first setting field groups 611 are arranged in a direction (for example, vertical direction) perpendicular to the time axis 620. A plurality of operation sequences can be set using the plurality of first setting field groups 611, and the plurality of operation sequences can be performed in parallel.

In a case where the plurality of operation sequences are performed in parallel using the plurality of first setting field groups 611, performance of the plurality of operation modules arranged in a row in the direction (for example, vertical direction) perpendicular to the time axis 620 start simultaneously.

The plurality of setting fields 610 arranged in a direction vertical to the time axis 620 constitute a second setting field group 612. Performance of the plurality of operation modules input to one second setting field group 612 starts simultaneously. A plurality of second setting field groups 612 are arranged in the direction (for example, lateral direction) parallel to the time axis 620. The arrangement order indicates an order in which the input operation modules are performed.

The operation modules to be input to the second setting field group 612 (for example, the second setting field group 612 second from a left side) whose time axis 620 has a later time are performed after all of the operation modules to be input to the second setting field group 612 (for example, the second setting field group 612 first from the left side) whose time axis 620 has an earlier time are completed.

In the present embodiment, the plurality of setting fields 610 are disposed in the lateral direction and the vertical direction and disposed in a matrix. However, in a case where the plurality of operation sequences are not performed in parallel, that is, in a case where only one operation sequence is performed, the plurality of setting fields 610 may be disposed in a line in only the direction (for example, lateral direction) parallel to the time axis 620. The plurality of operation modules constituting one operation sequence are input to one first setting field group 611.

However, the plurality of operation modules constituting one operation sequence may be input to the plurality of first setting field groups 611. For example, an operation of the mold clamping unit 100, an operation of the ejector unit 200, and an operation of the injection unit 300 are respectively input to the first setting field groups 611 different from each other. The first setting field group 611 and a subject (that is, the unit) of the operation are associated with each other, and thus, setting of the operation sequence is easily recognized when the first display screen 600 is viewed. This is effective in a case where the plurality of operation modules constituting one operation sequence are performed by a plurality of units.

In addition, in Fig. 4, the time axis 620 extends in the lateral direction. However, the time axis 620 may extend in the vertical direction. In any case, the plurality of setting fields 610 arranged in a row in the direction parallel to the time axis 620 constitute the first setting field group 611. In addition, the plurality of setting fields 610 arranged in a row in the direction perpendicular to the time axis 620 constitute the second setting field group 612.

A character reminiscent of the operation module of the injection molding machine 10 may be input to the setting field 610 to be exchangeable. However, in the present embodiment, the icons 631 to 648 indicating the operation modules of the injection molding machine 10 by figures are input to the setting field 610 to be exchangeable. By using the figures instead of the characters, the user can intuitively associate a content of the operation module. The icons 631 to 648 may indicate a peculiar operation module by a figure at the time of abnormality or a common operation module by a figure at the time of abnormality (for example, at the time of interruption during molding) or the time of normality (for example, at the time of molding).

The plurality of icons 631 to 648 are displayed simultaneously with the setting fields 610 outside the setting fields 610. It is possible to notify the user of the injection molding machine 10 of a candidate of the operation module which can be input to the setting field 610. The user designates one of the plurality of icons 631 to 648 by operating the operation unit 750 while viewing the first display screen 600 displayed on the display unit 760 and repeatedly inputs the designated icon to the setting field 610 while changing the setting field 610.

The icon 631 indicates an operation (hereinafter, also referred to simply as a "mold opening operation"), in which the mold clamping unit 100 performs the mold opening of the mold unit 800, by a figure. The icon 632 indicates an operation, in which the mold clamping unit 100 perform the mold closing of the mold unit 800, by a figure.

The icon 633 indicates an operation (hereinafter, also referred to simply as a "plasticizing operation"), in which the plasticizing motor 340 accumulates the molding material in front of the screw 330 inside the cylinder 310, by a figure.

The icon 634 indicates an operation (hereinafter, also referred to simply as a "discharge operation"), in which the injection motor 350 moves the screw 330 forward to discharge the molding material accumulated in front of the screw 330 inside the cylinder 310 to the outside of the cylinder 310, by a figure. The icon 635 indicates an operation, in which the injection motor 350 moves the screw 330 rearward, by a figure.

The icon 636 indicates an operation (hereinafter, also referred to simply as a "signal transmission operation"), in which the controller 700 transmits a signal to a peripheral device (for example, a mold monitoring camera 840) of the injection molding machine 10, by a figure. If the mold monitoring camera 840 receives a predetermined signal transmitted from the controller 700, the mold monitoring camera 840 captures a surface (front surface) of the movable mold 820 facing the stationary mold 810 and transmits a signal of the captured image to the controller 700.

The icon 637 indicates an operation (hereinafter, also referred to as a "signal reception confirmation operation") for confirming that the controller 700 receives the signal from the peripheral device (for example, the mold monitoring camera 840) of the injection molding machine 10, by a figure. If it is confirmed that the signal of the image captured by the mold monitoring camera 840 is received, the controller 700 performs image processing on the received image to determine presence or absence of a foreign substance adhering to the front surface of the movable mold 820. For example, as the foreign substance, residual debris left after the molding product is ejected can be cited.

The icon 638 indicates an operation (hereinafter, also referred to simply as an "ejection operation"), in which the ejector motor 210 moves the ejector rod 230 forward and the ejector pin 831 (refer to Fig. 1) which is a portion of the movable member 830 ejects the molding product from the movable mold 820, by a figure. The icon 639 indicates an operation (hereinafter, also referred to simply as a "return operation"), in which the ejector motor 210 moves the ejector rod 230 rearward to return the ejector pin 831 to an original position, by a figure.

The icon 640 indicates an operation, in which the movement unit 400 moves the injection unit 300 to be close to the mold unit 800 such that the nozzle 320 comes into contact with the mold unit 800, by a figure. The icon 641 indicates an operation (hereinafter, also referred to as "nozzle separation operation"), in which the movement unit 400 separates the injection unit 300 from the mold unit 800 such that the nozzle 320 is separated from the mold unit 800, by a figure.

The icon 642 indicates an operation in which the mold space adjustment mechanism 180 moves the toggle support 130 forward, that is, an operation in which the mold space adjustment mechanism 180 narrows the gap L between the toggle support 130 and the stationary platen 110, by a figure. The icon 643 indicates an operation in which the mold space adjustment mechanism 180 moves the toggle support 130 rearward, that is, an operation in which the mold space adjustment mechanism 180 widens the gap L between the toggle support 130 and the stationary platen 110, by a figure.

The icon 644 indicates a purge operation of supplying a purge material to the inside of the cylinder 310 and discharging the molding material from the inside of the cylinder 310. The purge material may be the same material as the molding material or may be a material different from the molding material. In a case where the purge material is different from the molding material, as the purging material, a material which is more likely to be discharged from the inside of the cylinder 310 than the molding material, that is, a material having excellent fluidity is used. The purge operation is performed in a state where the nozzle 320 is separated from the mold unit 800 in order to prevent filling of molding material into the inside of the mold unit 800 from the nozzle 320 provided at the front end of the cylinder 310. For example, the purge operation includes an operation in which the plasticizing motor 340 rotates the screw 330 so as to move the screw 330 rearward and an operation in which the injection motor 350 moves the screw 330 forward. The purge operation may be an operation in which the plasticizing motor 340 rotates the screw 330 in a state where the injection motor 350 prohibits the forward and rearward movements of the screw 330.

The icon 645 indicates an operation (hereinafter, also referred to as a "delay operation") of the controller 700 delaying start of the next operation module by a preset delay time, by a figure.

The icon 646 indicates an operation (hereinafter, also referred to as a "heating stop operation") of the controller 700 for stopping power supply to the heating unit 313 for heating the cylinder 310, by a figure.

The icon 647 indicates an operation (hereinafter, also referred to as "air blowing operation"), in which an air supplier 850 blows air forward from the surface (front surface) of the movable mold 820 facing the stationary mold 810, by a figure. For example, the air supplier 850 blows the air forward from the front surface of the movable mold 820 by supplying air to a gap between the through-hole into which the ejector pin 831 of the movable mold 820 is inserted and the ejector pin 831. The ejector pin 831 is a portion of the movable member 830 and forms a portion of a wall surface of the cavity space 801. The molding product molded in the cavity space 801 can be dropped forward from the movable mold 820 by the air supplied from the air supplier 850. In addition, the foreign substance adhering to the front surface of the movable mold 820 can also be dropped forward from the movable mold 820 by the air supplied from the air supplier 850. Moreover, a flow path of the air supplied from the air supplier 850 to the movable mold 820 is not limited to the gap between the through-hole into which the ejector pin 831 of the movable mold 820 is inserted and the ejector pin 831. For example, the air supplier 850 may blow air forward from a wall surface of a runner in front of the cavity space 801.

The icon 648 indicates an operation (hereinafter, also referred to as a "safety door opening operation"), in which a safety door opening unit 190 opens a safety door, by a figure. For example, the safety door opening unit 190 is constituted by a pneumatic cylinder. In addition, the safety door opening unit 190 may be constituted by a motor and a motion conversion mechanism such as a ball screw which converts a rotary motion of the motor into a linear motion of the safety door. The safety door opens and closes an opening portion of a cover of the mold clamping unit 100. When the safety door is opened, the user can access the mold unit 800 from the opening portion of the cover of the mold clamping unit 100. Therefore, a safety door switch 191 used for monitoring whether or not the safety door is opened is installed in the opening portion of the cover of the mold clamping unit 100. If the safety door is opened, in order to secure the safety of the user, the safety door switch 191 electrically interrupts a power source of the injection molding machine 10 and various motors (for example, the mold clamping motor 160, the mold space adjustment motor 183, the ejector motor 210, the plasticizing motor 340, the injection motor 350, and the motor 420) which are mounted on the injection molding machine 10. Meanwhile, if the safety door is closed, the safety door switch 191 electrically connects the power source of the injection molding machine 10 and the various motors mounted on the injection molding machine 10 to each other.

The icons 631 to 648 are displayed in black and white in Fig. 4. However, the icons 631 to 648 may be displayed in color. Visibility can be improved by different colors. For example, a cross mark meaning prohibition may be displayed in red so as to arouse attention of the user.

The first display control unit 711 may display the first display screen 600 on the display unit 760 for each content of abnormality. In addition, the first display control unit 711 may change at least one of the type, the number, and the disposition of the icons 631 to 648 displayed simultaneously with the setting fields 610 outside the setting fields 610 according to the content of the abnormality. Depending on the content of the abnormality, at least one of interchange of the icon, an increase/decrease in the number of icons, and rearrangement of the icons is performed. The icon suitable for the content of the abnormality can be preferentially displayed, and can support the user's input operation.

The controller 700 has a first operation sequence creation unit 712 which creates an operation sequence of the injection molding machine 10 to be performed when an abnormality occurs in the injection molding machine 10 according to data (for example, the icon) input to the plurality of setting fields 610. The user of the injection molding machine 10 can determine the operation sequence of the injection molding machine 10 to be performed when an abnormality occurs in the injection molding machine 10 by inputting the operation module to each of the plurality of setting fields 610 while viewing the first display screen 600. It is unnecessary to analyze a program preinstalled in the injection molding machine 10, and thus, it is possible to easily determine the operation sequence of the injection molding machine 10 performed when the abnormality occurs in the injection molding machine 10.

The first operation sequence creation unit 712 may create a plurality of operation sequences to be performed in parallel. The plurality of operation sequences are performed in parallel, and thus, it is possible to process the generated abnormality in a short time.

The first operation sequence creation unit 712 may create the operation sequence for each content of the abnormality. A content and sequence of the operation can be changed according to the contents of the abnormality, and it is possible to deal with the abnormality with fine details suitable for the content of the abnormality.

The controller 700 includes an abnormality determination unit 713 which determines presence or absence of the abnormality of the injection molding machine 10. The abnormality determination unit 713 determines the presence or absence of the abnormality of the injection molding machine 10 based on a detection value of a detector in the injection molding machine 10. The abnormality determination unit 713 determines each of the plurality of abnormalities based on the detection value of each of the plurality of detectors.

The controller 700 includes a first operation sequence execution unit 714 which controls the operation of the injection molding machine 10 according to the operation sequence prepared by the first operation sequence creation unit 712 if the abnormality determination unit 713 determines that there is abnormality. When the abnormality occurs, the injection molding machine 10 automatically performs a pre-created operation sequence, and thus, it is possible to decrease a trouble of a user's recovery work when the abnormality occurs.

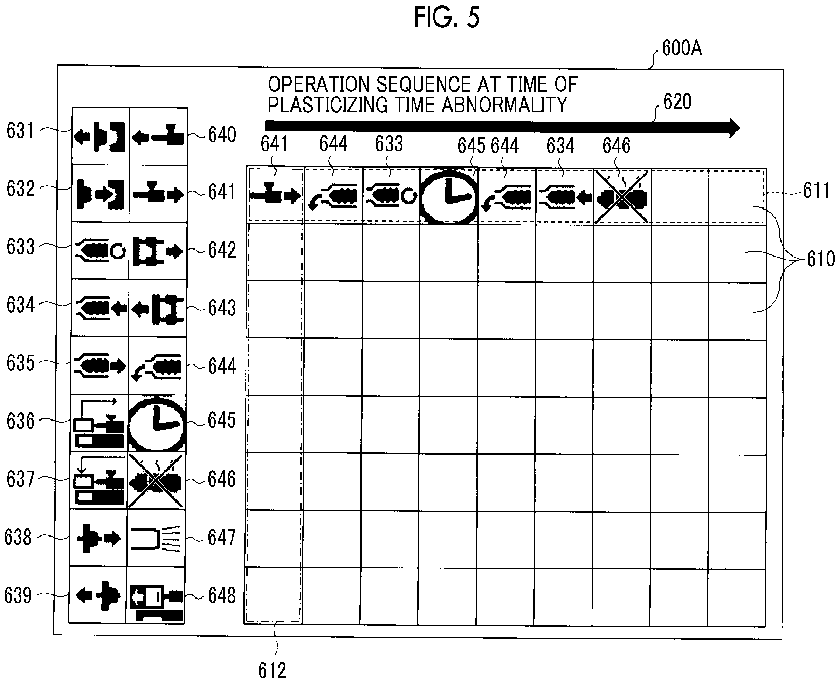

Fig. 5 is a diagram showing a first display screen which sets an operation sequence when a plasticizing time abnormality occurs according to the embodiment. A plasticizing time is a time required for the plasticizing process, and the plasticizing time abnormality means that the screw 330 does not move rearward to the plasticizing completion position even if an elapsed time from the start of the plasticizing process exceeds a predetermined time. The abnormality determination unit 713 measures the elapsed time from the start of the plasticizing process by a timer of the controller 700 to determine presence or absence of the plasticizing time abnormality.

As shown in Fig. 5, the first display control unit 711 displays a first display screen 600A on the display unit 760, in which the plurality of setting fields 610 to which the operation modules of the injection molding machine 10 sequentially performed when the plasticizing time abnormality occurs are input to be exchangeable are arranged on the first display screen 600A. Similarly to the first display screen 600 shown in Fig. 4, the first display screen 600A includes the plurality of setting fields 610, the time axis 620 for determining the order in which the operation modules input to the setting fields 610 are performed, and icons 631 to 648 which indicate operation modules to be input to the setting fields 610 outside the setting fields 610 by figures.

In the first setting field group 611 positioned first from the top in Fig. 5, the icon 641 of the nozzle separation operation, the icon 644 of the purge operation, the icon 633 of the plasticizing operation, the icon 645 of the delay operation, the icon 644 of the purge operation, the icon 634 of the discharge operation, and the icon 646 of the heating stop operation are arranged in this order in a direction of an arrow of the time axis 620.

The first operation sequence creation unit 712 creates the operation sequence of the injection molding machine 10 performed when the plasticizing time to be abnormality occurs, according to the icons input to the plurality of setting fields 610 in Fig. 5. Specifically, the first operation sequence creation unit 712 creates the operation sequence of the injection molding machine 10 performed when the plasticizing time abnormality occurs, according to the plurality of icons input to the first setting field group 611 positioned first from the top in Fig. 5.

If the abnormality determination unit 713 determines that there is the plasticizing time abnormality, the first operation sequence execution unit 714 controls the operation of the injection molding machine 10 according to the operation sequence created by the first operation sequence creation unit 712. In a case where the plasticizing time abnormality occurs, the molding material stays inside the cylinder 310 for a long time, and thus, there is a concern that the molding material inside the cylinder 310 thermally deteriorates. Therefore, interchange of the molding material inside the cylinder 310 is performed.

Specifically, first, the first operation sequence execution unit 714 performs the nozzle separation operation indicated by the icon 641. The movement unit 400 separates the injection unit 300 from the mold unit 800, and thus, the nozzle 320 is separated from the mold unit 800. Therefore, the filling of the inside of the mold unit 800 with the molding material injected form the nozzle 320 is prevented.

Next, the first operation sequence execution unit 714 performs the purge operation indicated by the icon 644. For example, an operation in which the plasticizing motor 340 rotates the screw 330 so as to move the screw 330 rearward and an operation in which the injection motor 350 moves the screw 330 forward are performed. Accordingly, the purge material is supplied to the inside of the cylinder 310, and the molding material which thermally deteriorates inside the cylinder 310 is discharged to the outside of the cylinder 310.

Next, the first operation sequence execution unit 714 performs the plasticizing operation indicated by the icon 633. The plasticizing motor 340 accumulates the molding material in front of the screw 330 inside the cylinder 310. The molding material which does not deteriorate thermally is accumulated inside the cylinder 310. In this way, the interchange of the molding material is performed inside the cylinder 310.

Next, the first operation sequence execution unit 714 performs the delay operation indicated by the icon 645. In a case where the recovery work is performed by the user of the injection molding machine 10 before an elapse time from the end of the plasticizing operation reaches a preset delay time, for example, in a case where a button for restarting the molding cycle is pressed, the molding cycle restarts, and the operation sequence is interrupted. In this case, since a new molding material is accumulated inside the cylinder 310 in advance, the user of the injection molding machine 10 presses the button for restarting the molding cycle, and thus, the molding cycle can be restarted.

Meanwhile, in a case where the recovery work is not performed by the user of the injection molding machine 10 before the elapsed time from the end of the plasticizing operation reaches the preset delay time, the user of the injection molding machine 10 is not aware of the plasticizing time abnormality. Therefore, it takes time to start the recovery work, during which the molding material may deteriorate thermally inside the cylinder 310. Accordingly, the operation sequence is continued so as to discharge the molding material from the inside of the cylinder 310.

In a case where the operation sequence is continued, first, the first operation sequence execution unit 714 performs the purge operation indicated by the icon 644. For example, the operation in which the plasticizing motor 340 rotates the screw 330 so as to move the screw 330 rearward and an operation in which the injection motor 350 moves the screw 330 forward are performed. Accordingly, the purge material is supplied to the inside of the cylinder 310, and the molding material which thermally deteriorates inside the cylinder 310 during the delay time is discharged to the outside of the cylinder 310.

Next, the first operation sequence execution unit 714 performs the discharge operation indicated by the icon 634. The injection motor 350 moves the screw 330 forward and discharges the purge material accumulated in front of the screw 330 inside the cylinder 310 to the outside of the cylinder 310. The purge material is discharged from the inside of the cylinder 310 before the heating of the cylinder 310 stops, and thus, it is possible to prevent the purge material from being solidified inside the cylinder 310. Accordingly, it is possible to prevent the screw 330 from being damaged by erroneously driving the screw 330 in a state where the purge material is solidified inside the cylinder 310.

Finally, the first operation sequence execution unit 714 performs the heating stop operation indicated by the icon 646. A current supplied to the heating unit 313 for heating the cylinder 310 is stopped. Accordingly, it is possible to suppress carbonization of the purge material remaining inside the cylinder 310.

Moreover, in the present embodiment, the heating of the cylinder 310 is stopped at the end of the operation sequence and a temperature of the cylinder 310 is lowered from a molding temperature to the room temperature. However, the operation of lowering the temperature of the cylinder 310 from the molding temperature to a keeping temperature may be performed. Since the keeping temperature is lower than the molding temperature and higher than the room temperature, it is possible to shorten a waiting time required so as to increase the temperature of the cylinder 310 to the molding temperature when the molding cycle restarts.

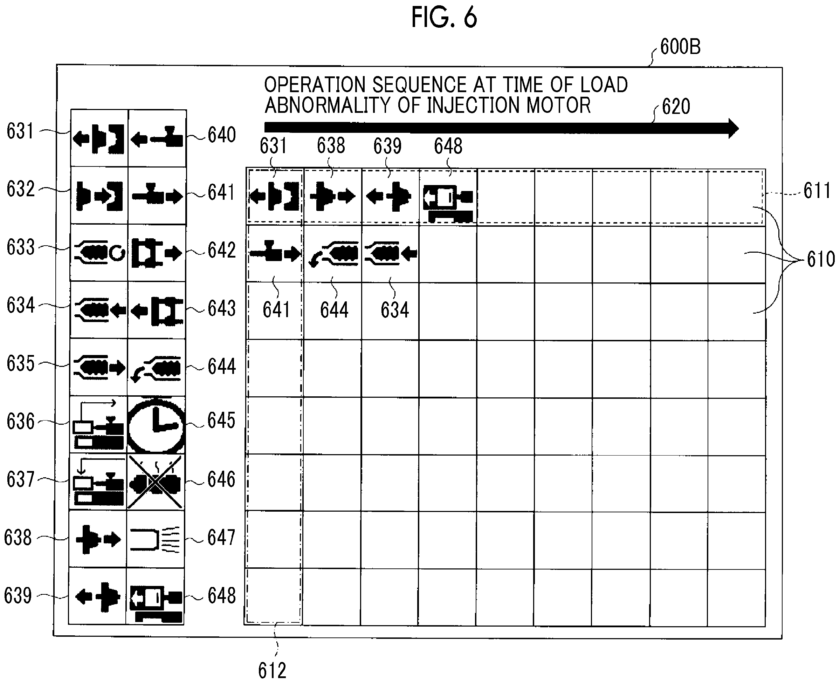

Fig. 6 is a diagram showing a first display screen which sets an operation sequence when a load abnormality of the injection motor occurs according to the embodiment. The load abnormality of the injection motor 350 means that a load of the injection motor 350 exceeds a predetermined threshold in the filling process or the holding pressure process. The abnormality determination unit 713 measures the current supplied to the injection motor 350 by an ammeter or the like and determines presence or absence of the load abnormality of the injection motor 350 depending on whether or not the current value supplied to the injection motor 350 exceeds the threshold.

As shown in Fig. 6, the first display control unit 711 displays a first display screen 600B on the display unit 760, in which the plurality of setting fields 610 to which the operation modules of the injection molding machine 10 sequentially performed when the load abnormality of the injection motor 350 occurs are input to be exchangeable are arranged on the first display screen 600B. Similarly to the first display screen 600 shown in Fig. 4, the first display screen 600B includes the plurality of setting fields 610, the time axis 620 for determining the order in which the operation modules input to the setting fields 610 are performed, and icons 631 to 648 which indicate operation modules to be input to the setting fields 610 outside the setting fields 610 by figures.

In the first setting field group 611 positioned first from a top in Fig. 6, the icon 631 of the mold opening operation, the icon 638 of the ejection operation, the icon 639 of the return operation, and the icon 648 of the safe door opening operation are arranged in this order in the arrow direction of the time axis 620.

In addition, In the first setting fieldgroup 611 positioned second from the top in Fig. 6, the icon 641 of the nozzle separation operation, the icon 644 of the purge operation, and the icon 634 of the discharge operation are arranged in this order in the arrow direction of the time axis 620.

The first operation sequence creation unit 712 creates the operation sequence of the injection molding machine 10 to be performed when the load abnormality of the injection motor 350 occurs, according to the icons input to the plurality of setting fields 610 in Fig. 6. Specifically, the first operation sequence creation unit 712 creates the operation sequence of the injection molding machine 10 performed when the load abnormality of the injection motor 350 occurs, according to the plurality of icons input to the first setting field group 611 positioned first from the top in Fig. 6. In addition, the first operation sequence creation unit 712 creates the operation sequence of the injection molding machine 10 performed when the load abnormality of the injection motor 350 occurs, according to the plurality of icons input to the first setting field group 611 positioned second from the top in Fig. 6.

If the abnormality determination unit 713 determines that there is the load abnormality of the injection motor 350, the first operation sequence execution unit 714 controls the operation of the injection molding machine 10 according to the operation sequence created by the first operation sequence creation unit 712. In a case where the load abnormality of the injection motor 350 occurs in the filling process, the filling process is interrupted halfway, and thus, the molding material filling the cavity space 801 is insufficient. In addition, in a case where the load abnormality of the injection motor 350 occurs in the holding pressure process, the holding pressure process is interrupted halfway in a state where the molding material filling the cavity space 801 is not solidified. Accordingly, a defective molding product remains inside the mold unit 800. If the molding product is completely solidified inside the mold unit 800, the molding product firmly adheres to the moldunit 800. Therefore, in order to reduce a trouble of cleaning the mold unit 800, ejection of a defective molding product from the mold unit 800 is performed such that the defective molding product is not completely solidified inside the mold unit 800. Since it takes time to confirm the state of the injection motor 350, during which the molding material is discharged from the cylinder 310 such that the molding material does not thermally deteriorate inside the cylinder 310. The ejection of the molding product from the mold unit 800 and the discharge of the molding material from the cylinder 310 are performed in parallel.

Specifically, in order to eject the molding product from the mold unit 800, first, the first operation sequence execution unit 714 performs the mold opening operation indicated by the icon 631. The mold clamping unit 100 moves the movable mold 820 rearward, and thus, a space into which the molding product is dropped is formed in front of the molding product adhering to the movable mold 820.

Next, the first operation sequence execution unit 714 performs the ejection operation indicated by the icon 638. For example, the ejector motor 210 moves the ejector rod 230 forward, and thus, the ejector pin 831 which is a portion of the movable member 830 ejects the molding product from the movable mold 820. Accordingly, the molding product drops from the movable mold 820.

Next, the first operation sequence execution unit 714 performs the return operation indicated by the icon 639. For example, the ejector motor 210 moves the ejector rod 230 rearward, and thus, the movable member 830 moves to an original position thereof.

In this way, the ejection of the molding product from the mold unit 800 is performed. The discharge of the molding material from the cylinder 310 is performed in parallel with the ejection of the molding product.

In order to discharge the molding material from the cylinder 310, first, the first operation sequence execution unit 714 performs the nozzle separation operation indicated by the icon 641. The nozzle separation operation is performed in parallel with the mold opening operation. The movement unit 400 separates the injection unit 300 from the mold unit 800, and thus, the nozzle 320 is separated from the mold unit 800. Accordingly, the filling of the inside of the mold unit 800 with the molding material injected form the nozzle 320 is prevented.

Next, the first operation sequence execution unit 714 performs the purge operation indicated by the icon 644. For example, an operation in which the plasticizing motor 340 rotates the screw 330 so as to move the screw 330 rearward and an operation in which the injection motor 350 moves the screw 330 forward are performed. The purge operation may be performed in parallel with the ejection operation. According to the purge operation, the purge material is supplied to the inside of the cylinder 310, and the molding material which thermally deteriorates inside the cylinder 310 is discharged to the outside of the cylinder 310.

Next, the first operation sequence execution unit 714 performs the discharge operation indicated by the icon 634. The discharge operation may be performed in parallel with the return operation. The injection motor 350 moves the screw 330 forward and discharges the purge material accumulated in front of the screw 330 inside the cylinder 310 to the outside of the cylinder 310. It is possible to suppress carbonization of the purge material inside the cylinder 310.

Finally, the first operation sequence execution unit 714 performs the safety door opening operation indicated by the icon 648. The safety door opening unit 190 opens the safety door. If the safety door is open, the safety door switch 191 electrically interrupts the power source of the injection molding machine 10 and various motors which are mounted on the injection molding machine 10. By opening the safety door, it is possible for the user of the injection molding machine 10 to visually confirm that the energization to the motor is prohibited.

In addition, the operation sequence shown in Fig. 6 is performed when the load abnormality of the injection motor 350 occurs in the present embodiment. However, the operation sequence shown in Fig. 6 may be performed when another abnormality occurs. The operation sequence shown in Fig. 6 may be performed when any abnormality occurs in a state in which the inside of the mold unit 800 is filled with the molding material.

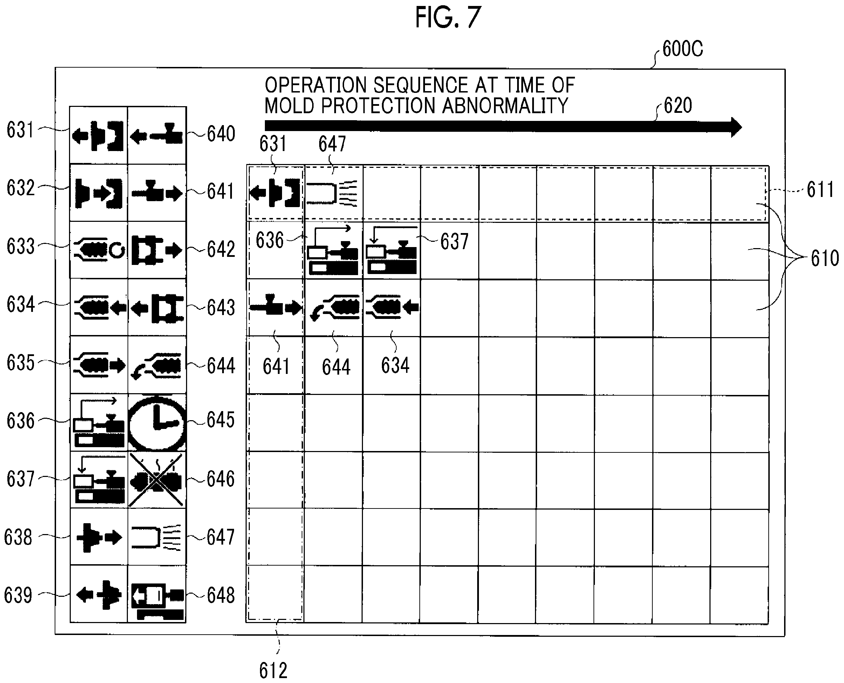

Fig. 7 is a diagram showing the first display screen which sets an operation sequence when a mold protection abnormality occurs according to the embodiment. The mold protection abnormality means that the foreign substances are interposed between the movable mold 820 and the stationary mold 810 during the mold closing process. As the foreign substance, a residual debris or the like of the molding product adhering to the movable mold 820 in the previous molding cycle can be mentioned.

If the foreign substances are interposed between the movable mold 820 and the stationary mold 810 during the mold closing process, the movable mold 820 is pushed back to the stationary mold 810 via the foreign substances, and thus, the load of the mold clamping motor 160 exceeds the threshold. Therefore, the abnormality determination unit 713 monitors the current supplied to the mold clamping motor 160 in the mold closing process by the ammeter or the like, and determines the presence or absence of the mold protection abnormality depending on whether or not the current value supplied to the mold clamping motor 160 exceeds the threshold during the mold closing process.

In addition, if the foreign substances are interposed between the movable mold 820 and the stationary mold 810 during the mold closing process, the movable mold 820 is pushed back to the stationary mold 810 via the foreign substances, and thus, the extension of the tie bar 140 exceeds a threshold. Therefore, the abnormality determination unit 713 monitors the extension of the tie bar 140 in the mold closing process by the tie bar strain detector 141, and may determine the presence or absence of the mold protection abnormality depending on whether or not the extension of the tie bar 140 exceeds the threshold during the mold closing process.

As shown in Fig. 7, the first display control unit 711 displays a first display screen 600C on the display unit 760, in which the plurality of setting fields 610 to which the operation modules of the injection molding machine 10 sequentially performed when the mold protection abnormality occurs are input to be exchangeable are arranged on the first display screen 600C. Similarly to the first display screen 600 shown in Fig. 4, the first display screen 600C includes the plurality of setting fields 610, the time axis 620 for determining the order in which the operation modules input to the setting fields 610 are performed, and icons 631 to 648 which indicate operation modules to be input to the setting fields 610 outside the setting fields 610, by figures.

In the first setting field group 611 positioned first from a top in Fig. 7, the icon 631 of the molding opening operation and the icon 647 of the air blowing operation are arranged in this order in the arrow direction of the time axis 620.

In addition, in the first setting fieldgroup 611 positioned second from the top in Fig. 7, the icon 636 of the signal transmission operation and the icon 637 of the signal reception confirmation operation are arranged in this order in the arrow direction of the time axis 620.

Moreover, in the first setting field group 611 positioned third from the top in Fig. 7, the icon 641 of the nozzle separation operation, the icon 644 of the purge operation, and the icon 634 of the discharge operation are arranged in this order in the arrow direction of the time axis 620.

The first operation sequence creation unit 712 creates the operation sequence of the injection molding machine 10 to be performed when the mold protection abnormality occurs, according to the icons input to the plurality of setting fields 610 in Fig. 7. Specifically, the first operation sequence creation unit 712 creates the operation sequence of the injection molding machine 10 performed when the mold protection abnormality occurs, according to the plurality of icons input to the first setting field group 611 positioned first from the top in Fig. 7. In addition, the first operation sequence creation unit 712 creates the operation sequence of the injection molding machine 10 performed when the mold protection abnormality occurs, according to the plurality of icons input to the first setting field group 611 positioned second from the top in Fig. 7. Moreover, the first operation sequence creation unit 712 creates the operation sequence of the injection molding machine 10 performed when the mold protection abnormality occurs, according to the plurality of icons input to the first setting field group 611 positioned third from the top in Fig. 7.

If the abnormality determination unit 713 determines that there is the mold protection abnormality, the first operation sequence execution unit 714 controls the operation of the injection molding machine 10 according to the operation sequence created by the first operation sequence creation unit 712. In a case where the mold protection abnormality occurs during the mold closing process, there is a concern that the mold unit 800 is damaged, and a configuration work of the damages is required. Accordingly, in order to reduce a cleaning work of the mold unit 800 by the user of the injection molding machine 10, foreign substances adhering to the surface of the movable mold 820 facing the stationary mold 810 are dropped. In addition, the dropping of the foreign substances is confirmed by the mold monitoring camera 840. In addition, since it takes time to confirm the damage of the mold unit 800, during which the molding material is discharged from the cylinder 310 such that that the molding material does not thermally deteriorate inside the cylinder 310. The dropping of foreign substance, the confirmation of the dropping, and the discharge of the molding material from cylinder 310 are performed in parallel with each other.

Specifically, in order to drop the foreign substances, first, the first operation sequence execution unit 714 performs the mold opening operation indicated by the icon 631. The mold clamping unit 100 moves the movable mold 820 rearward, and thus, a space into which the foreign substances are dropped is formed in front of the foreign substances such as the residual debris of the molding product adhering to the movable mold 820.

Next, the first operation sequence execution unit 714 performs the air blowing operation indicated by the icon 647. For example, the air supplier 850 blows air forward from the surface (front surface) of the movable mold 820 facing the stationary mold 810. Accordingly, the foreign substances adhering to the front surface of the movable mold 820 are dropped in front of the movable mold 820.

In this way, the foreign substances are dropped. Accordingly, it is possible to reduce the cleaning work of the mold unit 800 by the user of the injection molding machine 10. The confirmation of the dropping of the foreign substances is performed in parallel with the dropping of the foreign substances by the mold monitoring camera 840.

In order to confirm the dropping of the foreign substances, the first operation sequence execution unit 714 performs the signal transmission operation indicated by the icon 636. The controller 700 transmits a signal to the mold monitoring camera 840, and the mold monitoring camera 840 captures the front surface of the movable mold 820 and transmits the signal of the captured image to the controller 700. A plurality of images may be continuously captured. That is, the plurality of images may be captured during a preset time. The signal transmission operation is performed in parallel with the air blowing operation, and it is possible to confirm an aspect in which the foreign substances adhering to the front surface of the movable mold 820 are dropped forward while the air is blown forward from the front surface of the movable mold 820.

Next, the first operation sequence execution unit 714 performs the signal reception confirmation operation indicated by the icon 637. If it is confirmed that the image captured by the mold monitoring camera 840 is received, the controller 700 performs image processing on the received image to determine the presence or absence of the foreign substance adhering to the front surface of the movable mold 820. It is possible to automatically confirm the dropping of the foreign substances performed by the air blowing operation.

In this way, the dropping of the foreign substances is confirmed. Accordingly, it is possible to automatically confirm the dropping of the foreign substances, and it is possible to the trouble of the user of the injection molding machine 10. The discharge of the molding material from the cylinder 310 is performed in parallel with the dropping of the foreign substances and the confirmation of the dropping.

In order to discharge the molding material from the cylinder 310, first, the first operation sequence execution unit 714 performs the nozzle separation operation indicated by the icon 641. The nozzle separation operation maybe performed in parallel with the mold opening operation. The movement unit 400 separates the injection unit 300 from the mold unit 800, and thus, the nozzle 320 is separated from the mold unit 800. Therefore, the filling of the inside of the mold unit 800 with the molding material injected form the nozzle 320 is prevented.

Next, the first operation sequence execution unit 714 performs the purge operation indicated by the icon 644. For example, the operation in which the plasticizing motor 340 rotates the screw 330 so as to move the screw 330 rearward and the operation in which the injection motor 350 moves the screw 330 forward are performed. The purge operation may be performed in parallel with the air blowing operation and the signal transmission operation. Accordingly, the purge material is supplied to the inside of the cylinder 310 by the purge operation, and the molding material which thermally deteriorates inside the cylinder 310 is discharged to the outside of the cylinder 310.

Next, the first operation sequence execution unit 714 performs the discharge operation indicated by the icon 634. The discharge operation may be performed in parallel with the signal reception confirmation operation. The injection motor 350 moves the screw 330 forward and discharges the purge material accumulated in front of the screw 330 inside the cylinder 310 to the outside of the cylinder 310. It is possible to suppress carbonization of the purge material inside the cylinder 310.

### (Operation Sequence during Molding)

As shown in Fig. 3, the controller 700 includes a second display control unit 715 which displays a second display screen on the display unit 760, in which the plurality of setting fields to which operation modules of the injection molding machine 10 sequentially performed when the injection molding machine 10 molds the molding product are input so as to be exchangeable are arranged on the second display screen. Similarly to the first display screen 600 shown in Fig. 4, for example, the second display screen displayed by the second display control unit 715 includes the plurality of setting fields 610, the time axis 620 for determining the order in which the operation modules input to the setting fields 610 are performed, and icons 631 to 648 which indicate operation modules to be input to the setting fields 610 outside the setting fields 610 by figures.

The plurality of icons 631 to 648 are displayed simultaneously with the setting fields 610 outside the setting fields 610. It is possible to notify the user of the injection molding machine 10 of a candidate of the operation module which can be input to the setting field 610. The user designates one of the plurality of icons 631 to 648 by operating the operation unit 750 while viewing the second display screen displayed on the display unit 760 and repeatedly inputs the designated icon to the setting field 610 while changing the setting field 610.

In the second display screen the first display screen 600, at least one of the types, the numbers, and the dispositions of the icons displayed simultaneously with the setting fields 610 outside the setting fields 610 may be different from each other. That is, in the second display screen and the first display screen 600, at least one of the interchange of the icons, the increase/decrease of the number of the icons, and the rearrangement of the icons displayed simultaneously with the setting fields 610 outside the setting fields 610 maybe performed. The icon suitable at the time of the abnormality (for example, at the time of the interruption during the molding) or at the time of the normality (for example, at the time of the molding) can be preferentially displayed, and can support the user's input operation.

The controller 700 has a second operation sequence creation unit 716 which creates an operation sequence of the injection molding machine 10 performed when the injection molding machine 10 molds the molding product according to the data (for example, the icon) input to the plurality of setting fields 610. The user of the injection molding machine 10 can determine the operation sequence of the injection molding machine 10 to be performed when the injection molding machine 10 molds the molding product by inputting the operation module to each of the plurality of setting fields 610 while viewing the second display screen. It is unnecessary to analyze a program preinstalled in the injection molding machine 10, and thus, it is possible to easily determine the operation sequence of the injection molding machine 10 performed when the injection molding machine 10 molds the molding product.

The second operation sequence creation unit 716 may create a plurality of operation sequences to be performed in parallel. The plurality of operation sequences are performed in parallel, and thus, it is possible to mold the molding product in a short time.

The second operation sequence creation unit 716 may create the operation sequence for each mold unit 800. A content and sequence of the operation can be changed according to the structure of the mold unit 800, and it is possible to perform detail molding suitable for the structure of the mold unit 800.

The controller 700 includes a second operation sequence execution unit 717 which controls the operation of the injection molding machine 10 according to the operation sequence created by the second operation sequence creation unit 716. The injection molding machine 10 automatically performs the operation sequence created in advance, and thus, it is possible to automatically perform a special molding operation and to reduce a trouble of the user's operation.

Hereinbefore, the embodiments or the like of the controller of the injection molding machine and the injection molding machine are described. However, the present invention is not limited to the above-described embodiments or the like, and various modifications and improvements are possible within the scope of the present invention described in the claims.

### Brief Description of the Reference Symbols

- 10:: injection molding machine
- 600:: first display screen
- 610:: setting field
- 620:: time axis
- 631 to 648:: icon
- 700:: controller
- 711:: first display control unit
- 712:: first operation sequence creation unit
- 713:: abnormality determination unit
- 714:: first operation sequence execution unit
- 750:: operation unit
- 760:: display unit

## Claims

1. A controller (700) of an injection molding machine (10) configured to control an operation of the injection molding machine (10), comprising:
a display control unit (711, 715) configured to display a display screen (600) on a display unit (760), a plurality of setting fields (610) to which operation modules of the injection molding machine (10) sequentially performed when an abnormality occurs in the injection molding machine (10) are input to be exchangeable being arranged on the display screen (600); and
an operation sequence creation unit (712, 716) configured to create an operation sequence of the injection molding machine (10) to be performed when the abnormality occurs in the injection molding machine (10), according to data input to the plurality of setting fields (610).

2. The controller (700) of an injection molding machine (10) according to claim 1,
wherein the display control unit (711, 715) is configured to display the display screen(600) on the display unit (760), the plurality of setting fields (610) to which an icon indicating the operation module by a figure is input to be exchangeable being arranged on the display screen (600), and
wherein the operation sequence creation unit (712, 716) is configured to create the operation sequence according to types and an order of a plurality of the icons input to the plurality of setting fields (610).

3. The controller (700) of an injection molding machine (10) according to claim 1 or 2, further comprising:
an abnormality determination unit (713) configured to determine presence or absence of the abnormality; and
an operation sequence execution unit (714) configured to control the operation of the injection molding machine (10) according to the operation sequence created by the operation sequence creation unit (712, 716) when the abnormality determination unit (713) determines that there is the abnormality.

4. An injection molding machine (10) comprising:
the controller (700) according to any one of claims 1 to 3.

## Patentansprüche

1. Steuerung (700) einer Spritzgießmaschine (10), die konfiguriert ist, den Betrieb der Spritzgießmaschine (10) zu steuern, umfassend:
eine Anzeigesteuereinheit (711, 715), die konfiguriert ist, einen Anzeigebildschirm (600) auf einer Anzeigeeinheit (760) anzuzeigen, wobei eine Mehrzahl von Einstellfeldern (610) auf dem Anzeigebildschirm (600) angeordnet ist, in die Arbeitsmodule der Spritzgießmaschine (10), die sequentiell ausgeführt werden, wenn eine Abnormalität in der Spritzgießmaschine (10) auftritt, austauschbar eingegeben werden; und
eine Arbeitsabfolge-Erstellungseinheit (712, 716), die konfiguriert ist, eine auszuführende Arbeitsabfolge der Spritzgießmaschine (10) gemäß in die Mehrzahl von Einstellfeldern (610) eingegebenen Daten zu erstellen, wenn die Abnormalität in der Spritzgießmaschine (10) auftritt.

2. Steuerung (700) einer Spritzgießmaschine (10) nach Anspruch 1,
wobei die Anzeigesteuereinheit (711, 715) konfiguriert ist, den Anzeigebildschirm (600) auf der Anzeigeeinheit (760) anzuzeigen, wobei die Mehrzahl von Einstellfeldern (610), in die ein das Arbeitsmodul durch eine Abbildung anzeigendes Icon austauschbar eingegeben wird, auf dem Anzeigebildschirm (600) angeordnet ist, und
wobei die Arbeitsabfolge-Erstellungseinheit (712, 716) konfiguriert ist, die Arbeitsabfolge gemäß Typen und einer Reihenfolge einer Mehrzahl der in die Mehrzahl von Einstellfeldern (610) eingegebenen Icons zu erstellen.

3. Steuerung (700) einer Spritzgießmaschine (10) nach Anspruch 1 oder 2, ferner umfassend:
eine Abnormalitäts-Bestimmungseinheit (713), die konfiguriert ist, das Vorliegen oder Nichtvorliegen der Abnormalität zu bestimmen; und
eine Arbeitsabfolge-Ausführungseinheit (714), die konfiguriert ist, den Betrieb der Spritzgießmaschine (10) gemäß der durch die Arbeitsabfolge-Erstellungseinheit (712, 716) erstellten Arbeitsabfolge zu steuern, wenn die Abnormalitäts-Bestimmungseinheit (713) bestimmt, dass die Abnormalität vorliegt.

4. Spritzgießmaschine (10), umfassend:
die Steuerung (700) nach einem der Ansprüche 1 bis 3.

## Revendications

1. Un contrôleur (700) d'une machine de moulage par injection (10), conçu pour contrôler un fonctionnement de la machine de moulage par injection (10), comprenant :
une unité de contrôle d'affichage (711, 715) conçue pour afficher un écran d'affichage (600) sur une unité d'affichage (760), une pluralité de champs de paramétrage (610), dans lesquels des modules de fonctionnement de la machine de moulage par injection (10), effectués de manière séquentielle lorsqu'une anomalie survient dans la machine de moulage par injection (10), sont entrés pour être échangés, étant disposés sur l'écran d'affichage (600) ; et
une unité de création de séquence de fonctionnement (712, 716) conçue pour créer une séquence de fonctionnement de la machine de moulage par injection (10) à réaliser lorsque l'anomalie survient dans la machine de moulage par injection (10), selon des données entrées dans la pluralité de champs de paramétrage (610).

2. Le contrôleur (700) d'une machine de moulage par injection (10) selon la revendication 1,
dans lequel l'unité de contrôle d'affichage (711, 715) est conçue pour afficher l'cran d'affichage (600) sur l'unité d'affichage (760), la pluralité de champs de paramétrage (610), sur lesquels une icône indiquant le module de fonctionnement par une figure est entrée pour être échangée, étant disposés sur l'écran d'affichage (600) et
dans lequel l'unité de création de séquence de fonctionnement (712, 716) est conçue pour créer la séquence de fonctionnement selon des types et un ordre d'une pluralité des icônes entrées dans la pluralité de champs de paramétrage (610).

3. Le contrôleur (700) d'une machine de moulage par injection (10) selon la revendication 1 ou 2, comprenant en outre :
une unité de détermination d'anomalie (713) conçue pour déterminer la présence ou l'absence de l'anomalie ; et
une unité d'exécution de séquence de fonctionnement (714) conçue pour contrôler le fonctionnement de la machine de moulage par injection (10) selon la séquence de fonctionnement créée par l'unité de création de séquence de fonctionnement (712, 716) lorsque l'unité de détermination d'anomalie (713) détermine qu'il y a une anomalie.

4. Une machine de moulage par injection (10) comprenant :
le contrôleur (700) selon l'une des revendications 1 à 3.
